# FASCICULE DE BREVET EUROPEEN

(11) **EP 3 175 042 B1**
(45) Date de publication et mention de la délivrance du brevet: **09.01.2019**
(21) Numéro de dépôt: 15756355.2
(22) Date de dépôt: 23.07.2015
(51) Int. Cl.: E01F 8/00, E01C 1/00

(54) **OUVRAGE DE COUVERTURE SEMI-OUVERT DESTINÉ À COUVRIR PARTIELLEMENT UNE VOIE DE CIRCULATION**
HALBOFFENE ABDECKVORRICHTUNG FÜR TEILWEISES ABDECKEN EINER FAHRSPUR
SEMI-OPEN COVERING STRUCTURE FOR PARTIALLY COVERING A TRAFFIC LANE

(30) Priorité: 30.07.2014 FR 1457401
(43) Date de publication de la demande: 07.06.2017
(73) Titulaire: Veyrat-Masson, Christophe, 13100 Aix-en-Provence (FR)
(72) Inventeur: Veyrat-Masson, Christophe, 13100 Aix-en-Provence (FR)
(74) Mandataire: Lavoix
(86) Numéro de dépôt international: PCT/EP2015/066904
(87) Numéro de publication internationale: WO 2016/016092

(56) Documents cités:
- EP-A1- 0 567 040
- WO-A1-01/68988
- AT-U1- 3 122
- DE-A1- 2 909 473
- DE-U1-202008 003 763
- NL-C1- 1 017 839

## Description

La présente invention concerne un ouvrage de couverture d'une voie de circulation, notamment automobile, s'étendant sur un sol selon une ligne, l'ouvrage comprenant une pluralité de structures porteuses distribuées suivant la ligne, chaque structure porteuse s'étendant d'une première portion de sol, située d'un côté de la voie de circulation, jusqu'à une deuxième portion de sol, située de l'autre côté.

L'invention concerne également un procédé de couverture pour couvrir une telle voie de circulation.

Il est connu que les voies de circulation, notamment automobiles, constituent une source de nuisance, en particulier en milieu urbain ou péri-urbain, pour les personnes situées à proximité. Par exemple, les voies express urbaines sont souvent une source de nuisances visuelles, olfactives et/ou auditives pour les riverains. En outre, ces voies coupent physiquement et fonctionnellement le tissu urbain en deux.

Pour remédier à ces inconvénients, il est connu d'enterrer les voies de circulation, en les faisant passer dans des tunnels. Ceci permet de récupérer de l'espace en surface. Une telle solution présente toutefois l'inconvénient d'être onéreuse, de simplement déplacer le bruit et la pollution en les concentrant en certains points, et de devoir être prévue à l'avance lors de la construction de la voie de circulation.

Pour des voies de circulation existantes ou en construction, il est également connu de les isoler partiellement à l'aide de murs anti-bruit, qui agissent comme des palissades s'opposant à la propagation du bruit émis par les véhicules circulant sur la voie. Toutefois, une telle solution, si elle donne satisfaction du point de vue sonore, est souvent considérée comme inesthétique, inefficace vis-à-vis de la pollution et source de stress par la population environnante.

EP-A-0 567 040 décrit un ouvrage de couverture comprenant des structures porteuses et des bacs à plantes.

Un but de l'invention est donc de fournir un dispositif apte à réduire le bruit perçu en provenance d'une voie de circulation, tout en étant plus esthétique qu'un mur antibruit, et présentant un coût compétitif par rapport à un tunnel.

A cet effet, l'invention a pour objet un ouvrage de couverture selon la revendication 1.

Selon des modes particuliers de réalisation, l'ouvrage de couverture comprend l'une ou plusieurs des caractéristiques correspondant aux revendications 2 à 8, prises isolément ou selon toutes les combinaisons techniquement possibles.

L'invention concerne enfin un procédé de couverture selon la revendication 10.

L'invention sera mieux comprise à la lecture de la description qui va suivre, donnée uniquement à titre d'exemple et faite en se référant aux dessins annexés, sur lesquels :
- la figure 1 est une vue schématique perspective d'un ouvrage de couverture selon l'invention, seulement deux tronçons étant représentés,
- la figure 2 est une section de l'ouvrage de couverture représenté sur la figure 1 selon un plan sensiblement perpendiculaire à la ligne selon laquelle s'étend la voie de circulation, le plan étant situé à la jonction entre deux tronçons,
- la figure 3 est une vue en perspective analogue à la figure 1, montrant en outre un exemple de végétation dans les bacs, et une passerelle propre à permettre le passage de personnes au-dessus de la couverture,
- la figure 4 est une vue schématique en perspective d'un premier type de bac représenté sur les figure 1 à 3,
- la figure 5 est une section du bac représenté sur la figure 4 selon un plan perpendiculaire à la direction de plus grande extension du bac,
- la figure 6 est une vue en perspective d'un deuxième type de bac représenté sur les figures 1 à 3,
- la figure 7 est une vue en section du bac représenté sur la figure 6, selon un plan perpendiculaire à la direction de plus grande extension du bac,
- la figure 8 est une vue en perspective d'un bac supplémentaire représentant troisième type de bac visible sur les figures 1 à 3, et
- la figure 9 est une section du bac supplémentaire représenté sur la figure 8 selon un plan perpendiculaire à la direction de plus grande extension du bac supplémentaire.

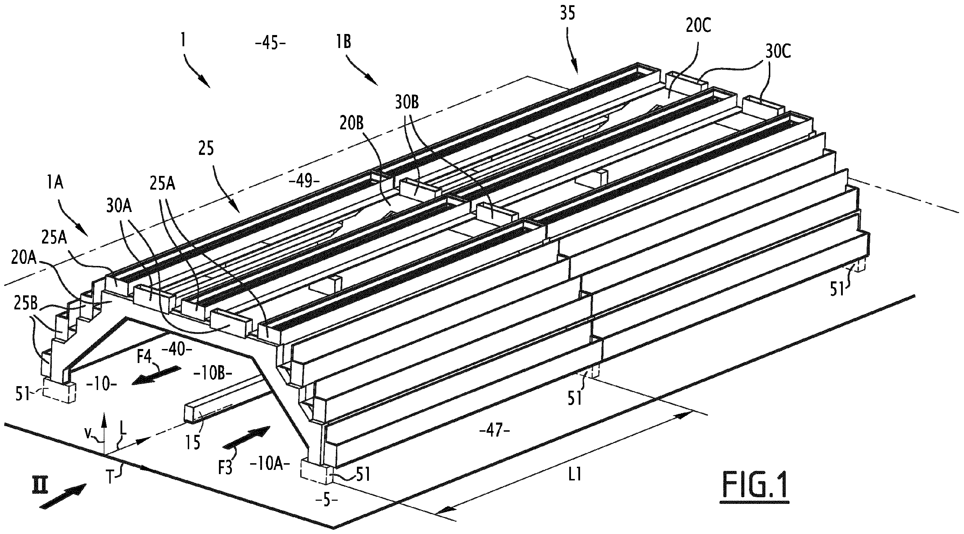

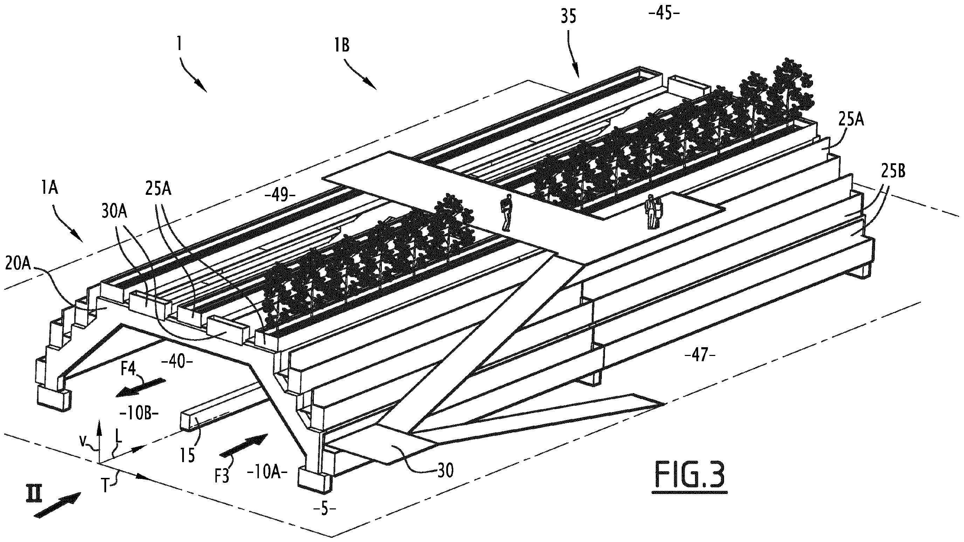

En référence aux figures 1 à 3, on décrit un ouvrage de couverture 1 conforme à l'invention. Sur les figures 1 et 3, sont représentés seulement deux tronçons 1A et 1B consécutifs de l'ouvrage de couverture 1.

L'ouvrage de couverture 1 comprend avantageusement un grand nombre de tronçons (non tous représentés).

L'ouvrage de couverture 1 s'étend sur un sol 5 selon une ligne L, qui est droite dans l'exemple représenté, c'est-à-dire qui forme une direction longitudinale. Selon des variantes non représentées, l'ouvrage de couverture 1 s'étend selon une ligne courbe, éventuellement non plane, et/ou comportant des brisures. Selon d'autres variantes non représentées, l'ouvrage de couverture 1 comprend des bifurcations ou des carrefours.

On définit également une direction transversale T sensiblement parallèle au sol 5 et sensiblement perpendiculaire à la ligne L, ainsi qu'une direction verticale V.

L'ouvrage de couverture 1 est adapté pour couvrir partiellement une voie de circulation 10, par exemple à deux fois deux voies 10A, 10B en sens opposés selon la ligne L, par exemple séparées par un muret 15.

Selon des variantes non représentées, la voie de circulation 10 est d'un autre type connu en lui-même pour générer une pollution visuelle et/ou sonore, par exemple une artère de circulation automobile possédant un nombre de voies différent, une voie ferrée, ou un canal.

L'ouvrage de couverture 1 comprend une pluralité de structures porteuses 20A, 20B, 20C distribuées suivant la ligne L, et une pluralité de bacs 25 reposant avantageusement sur deux structures porteuses consécutives. L'ouvrage de couverture 1 comprend en outre avantageusement des bacs supplémentaires 30, 30A, 30B, 30C dont chacun est posé sur une seule structure porteuse. L'ouvrage de couverture 1 comprend avantageusement au moins une passerelle 30 visible sur la figure 3.

L'ouvrage de couverture 1 comprend aussi avantageusement des surfaces constituées de caillebotis 32 disposés pour permettre à des personnes de se déplacer le long des bacs 25, 30A, 30B, 30C.

Dans l'exemple représenté sur les figures, le tronçon 1B est analogue au tronçon 1A, aussi seul le tronçon 1A sera décrit en détail ci-après.

Le tronçon 1A s'étend selon la ligne L de la structure porteuse 30A à la structure porteuse 30B. Le tronçon 1A comprend les structures porteuses 30A, 30B et tous les bacs 25, 30A, 30B reposant sur les structures porteuses 30A, 30B.

Selon des variantes non représentées, les tronçons 1A, 1B diffèrent l'un de l'autre, par exemple par leur longueur selon la ligne L, leur orientation par rapport au sol 5, leur nivellement, ou leur configuration particulière.

Selon d'autres variantes encore, un ou plusieurs tronçons de l'ouvrage de couverture 1 comprennent un passage latéral (non représenté) pour permettre la réalisation d'une bretelle d'accès ou de sortie de la voie de circulation 10.

Les structures porteuses 20A, 20B, 20C et les bacs 25 forment une couverture 35 définissant un espace interne 40 situé entre la couverture et le sol 5, et présentant des ouvertures permettant à l'air de circuler entre l'espace interne et l'atmosphère 45 située à proximité de l'ouvrage de couverture 1.

Les structures porteuses 20A, 20B du tronçon 1A sont avantageusement analogues l'une à l'autre, aussi seule la structure porteuse 20A sera décrite ci-après.

Selon des variantes non représentées, certaines des structures porteuses 20A, 20B, 20C diffèrent les unes des autres, par exemple par leur largeur, leur forme ou leur hauteur.

La structure porteuse 20A s'étend d'une première portion de sol 47 située d'un côté de la voie de circulation 10 selon la direction transversale T, jusqu'à une deuxième portion de sol 49 située de l'autre côté de la voie de circulation. La structure porteuse 20A est sensiblement orthogonale à ligne L. La structure porteuse 20A est sensiblement symétrique par rapport à un plan P parallèle à la direction verticale V et à la ligne L.

La structure porteuse 20A comprend des supports 51 situés de part et d'autre de la voie de circulation 10 selon la direction transversale T, et un portique 53 formant une arche et fixé sur les supports.

Les supports 51 sont des éléments connus en eux-mêmes préalablement coulés dans du béton pour permettre la descente de charge de l'ouvrage de couverture 1 dans le sol 5.

Le portique 53 comprend une partie centrale 55 s'étendant sensiblement transversalement, et deux parties latérales 57, 59 s'étendant, par exemple obliquement, respectivement entre la partie centrale 55 et les supports 51.

Selon des modes particuliers de réalisation non représentés, les structures porteuses 20A, 20B, 20C comportent avantageusement un ou plusieurs piliers intermédiaires s'étendant entre le sol 5 et la partie centrale 55 pour soutenir cette dernière.

Chacune des parties 55, 57, 59 comprend une enveloppe 61 en acier, un système d'armatures 63 en acier, et du béton 65 coulé ou injecté dans l'enveloppe 61.

Les enveloppes 61 présentent par exemple une épaisseur d'environ 20 mm.

La partie centrale 55 possède une surface supérieure 67 sur laquelle reposent les bacs supplémentaires 30A et un premier type de bac 25 portant la référence 25A.La partie centrale 55 se situe à une hauteur H par rapport au sol 5 comprise entre 2 m et 10 m, de préférence comprise entre 4 m et 8 m, et de par exemple environ 6,5 m. La partie centrale 55 comprend une surface inférieure 69 présentant une extension L3 selon la direction transversale T qui dépend du type de voie de circulation 10.

Selon un mode de réalisation particulier, l'enveloppe 61 de la partie centrale 55 est ouverte en partie supérieure, de manière à ce que la surface supérieure 67 soit en béton.

Par exemple, L3 est comprise entre 2 m et 35 m, de préférence entre 4 m et 22 m.

Les parties latérales 57, 59 forment par exemple un angle d'environ 45° avec la direction verticale V. Chacune des parties latérales 57, 59 comprend par exemple une partie d'extrémité 71 sensiblement verticale fixée respectivement sur l'un des supports 51, et définit par exemple deux surfaces d'appui 73 sur lesquelles repose un deuxième type de bacs 25 référencés 25B.

Par exemple, la première portion de sol 47, les surfaces d'appui 73, et la surface supérieure 67 de la partie centrale 55 sont réparties sensiblement régulièrement selon la direction verticale V, de manière à étager sensiblement régulièrement les bacs 25A et 25B le long des parties latérales 57, 59.

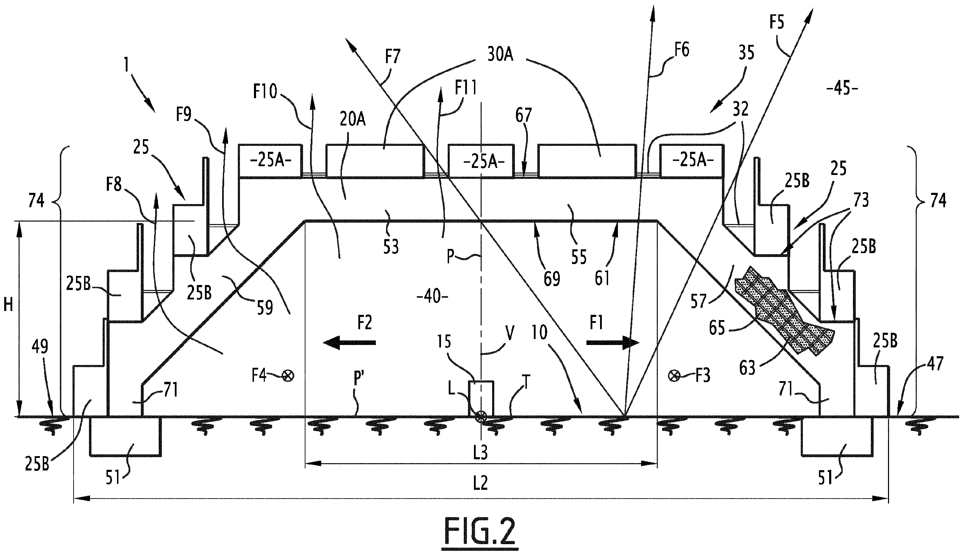

Les bacs 25 et les structures porteuses 20A et 20B forment un écran 74 (figure 2) propre à s'opposer à une propagation d'ondes sonores horizontalement et sensiblement orthogonalement à la ligne L de l'espace interne 40 vers l'atmosphère 45, respectivement selon des flèches F1, F2 visibles sur la figure 2.

Les bacs 25 et les bacs supplémentaires 30A, 30B, 30C sont adaptés pour recevoir de la terre végétale et des plantes, c'est-à-dire pour être « végétalisés », comme cela est représenté pour deux bacs particuliers de type 25A sur la figure 3.

Les bacs 25 sont avantageusement disposés sensiblement parallèlement à la ligne L, et forment par exemple des alignements sensiblement continus.

Par ailleurs, en projection verticale sur un plan P' (figure 2) parallèle au sol 5, les ouvertures de la couverture 35 représentent au moins 30% de la couverture. Dans l'exemple, la couverture est donc partielle et inférieure à 50%, les caillebotis 32 étant considérés sensiblement comme des ouvertures dans le sens vertical.

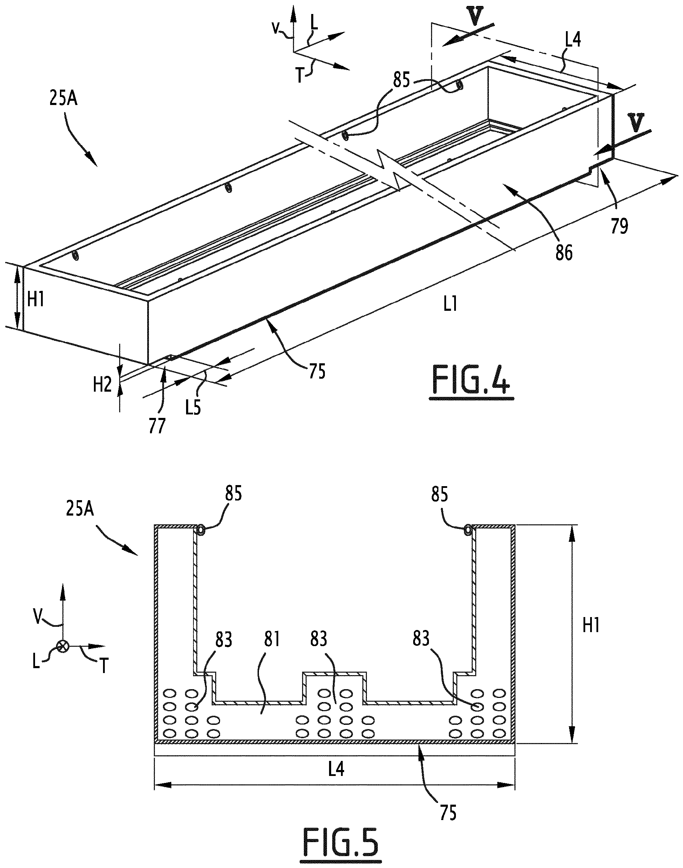

Les bacs 25 du premier type 25A sont avantageusement analogues les uns aux autres et sont représentés en détail sur les figures 4 et 5. Les bacs 25A sont par exemple au nombre de trois par tronçon. Chaque bac 25A présente une forme générale sensiblement rectangulaire et allongée selon la ligne L. Chaque bac 25A comporte en outre une surface inférieure 75 présentant deux épaulements 77, 79 selon la ligne L permettant un calage sur deux structures porteuses consécutives. Les bacs 25A sont constitués à au moins 50% en masse de béton.

Les bacs 25A comprennent un fond 81 comportant par exemple trois poutres 83 en béton armé s'étendant selon la ligne L. Les bacs 25A comportent en outre des attaches 85 permettant de fixer des haubans (non représentés) de retenue de la végétation plantée dans les bacs 25A et/ou des haubans (non représentés) fixés sur les structures porteuses 20A, 20B, 20C pour stabiliser les bacs 25, 30A, 30B, 30C par rapport aux structures porteuses.

Les bacs 25A présentent avantageusement une hauteur H1 selon la direction verticale V comprise entre 0,5 m et 2 m, par exemple égale à environ 1 m, et avantageusement une largeur L4 selon la direction transversale T comprise entre 1 m et 6 m, par exemple égale à environ 2 m.

Les épaulements 77, 79 présentent par exemple une extension longitudinale L5 de 60 cm environ, et une hauteur H2 selon la direction verticale V d'environ 5 cm.

Le volume de terre végétale dans le bac 25A est supérieur à 5 m³, de préférence supérieur à 10 m³, et est par exemple égal à environ 13 m³. Le bac 25A comprend par exemple environ 9 tonnes de métal et 21 tonnes de béton, pour un poids total d'environ 45 tonnes.

Les bacs 25A se situent par exemple transversalement au milieu et sensiblement aux extrémités de la partie centrale 55 des structures porteuses (figure 2).

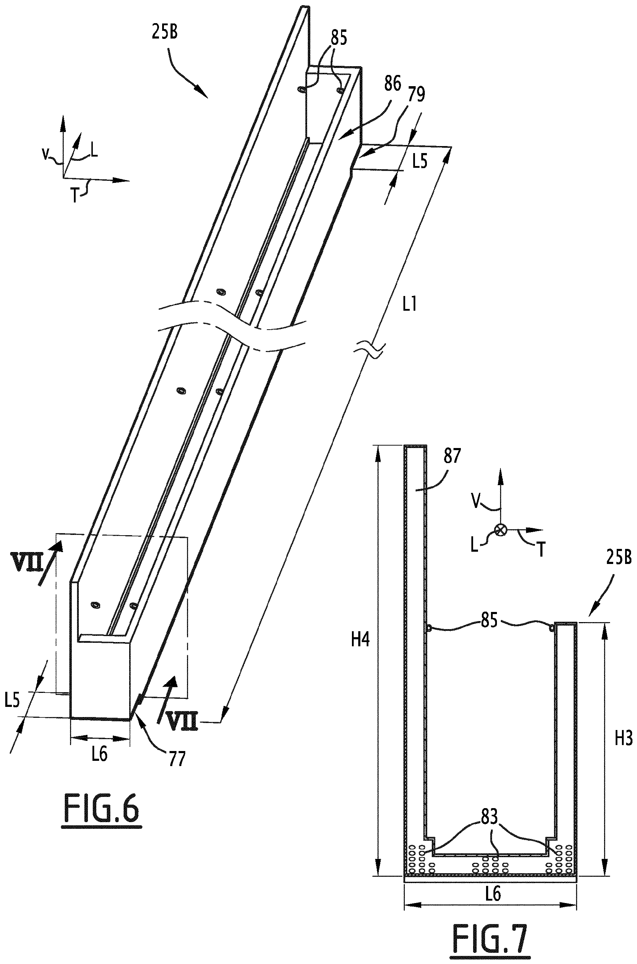

En référence aux figures 6 et 7, les bacs 25 du deuxième type 25B sont analogues aux bacs du premier type 25A représentés sur les figures 4 et 5. Les éléments similaires portent les mêmes références numériques et ne seront pas décrits à nouveau. Seules les différences seront décrites ci-après.

Les bacs 25B diffèrent des bacs 25A représentés sur les figures 4 et 5 par le fait qu'ils comportent une paroi latérale 87 plus élevée que leurs autres parois latérales.

La paroi latérale 87 présente par exemple une hauteur H4 selon la direction verticale V comprise entre 2,5 et 4 m, tandis que les autres parois latérales présentent par exemple une hauteur H3 d'environ 1,5 m. La hauteur H4 est adaptée à la configuration de l'ouvrage de couverture 1 de manière à permettre un recouvrement des bacs 25B selon la direction verticale V pour constituer l'écran 74. Plus la hauteur H4 est importante, plus le recouvrement est important.

Selon un mode de réalisation particulier, la partie plus élevée de la paroi latérale 87 est de nature différente de celle des autres parois latérales du bac 25B. Par exemple, la partie plus élevée est une paroi dite « acoustique ».

Une paroi acoustique est par exemple en bois ou en granulats compressés. C'est une structure alvéolaire permettant de "casser" l'onde sonore avant sa réverbération. Une paroi acoustique, par son pourcentage important de vide, est plus légère qu'une paroi en béton qui ne fait que "dévier" l'onde sonore.

Les bacs 25B diffèrent également par la hauteur H3, éventuellement plus importante que la hauteur H1 des bacs 25A.

En outre, les bacs 25B présentent une largeur L6 selon la direction transversale T éventuellement plus réduite que la largeur L4 des bacs 25A. La largeur L6 est par exemple d'environ 1 m.

Les bacs 25B sont adaptés pour contenir un volume de terre végétale supérieur à 5 m³, de préférence supérieur à 7 m³ et par exemple égal à environ 8 m³. Les bacs 25B comprennent par exemple environ 9 tonnes de métal et environ 20 tonnes de béton, pour un poids total d'environ 39 tonnes.

Certains des bacs 25B reposent sur les surfaces d'appui 73 de deux structures porteuses consécutives selon la ligne L. En outre, pour chaque tronçon 1A, 1B, deux bacs de type 25B sont avantageusement accolés aux parties d'extrémité 71 de chaque partie latérale 59 des portiques 53.

Ainsi, chaque tronçon 1A, 1B comporte par exemple trois bacs 25B de chaque côté selon la direction transversale T. Le nombre total de bacs 25B par tronçon est donc par exemple de six. De chaque côté selon la direction transversale T, les bacs 25B sont étagés verticalement, et avantageusement transversalement.

Selon un mode de réalisation particulier (non représenté), deux bacs 25B ou 25A contigus selon la ligne L et posés sur une même structure porteuse sont plus courts selon la ligne L, afin de définir un passage d'homme sensiblement transversal sur la structure porteuse. Ce passage permet à un homme de passer transversalement entre les bacs 25B sur la structure porteuse pour aller du sol 5 vers les bacs 30A, 30B, 30C et 25A situés plus haut, par exemple pour l'entretien de la végétation. Par exemple, les parties hautes des bacs 25A ou 25B posés sur le portique 53 de la structure porteuse en question, de chaque côté du portique selon la ligne L, sont plus courts selon la ligne L pour définir le passage d'homme. En revanche, le fond des bacs 25A ou 25B et les poutres 83 ne sont pas plus courts (pour garder la même surface de portance des bacs sur le portique). Ce passage permet de faire l'entretien des bacs en remontant le long du portique 53 entre les bacs 25B ou 25A du sol vers le sommet du portique. Le passage permet avantageusement d'atteindre les caillebottis à chaque niveau.

Selon une variante non représentée, tout ou partie des bacs 25B accolés aux parties d'extrémités 71 sont remplacés par un mur vertical, pour limiter l'extension transversale de l'ouvrage de couverture 1.

De chaque côté, les deux bacs 25B reposant sur les surfaces d'appui 73 sont séparés par l'un des caillebotis 32. De même, de chaque côté, le bac 25B situé le plus haut est séparé du bac 25A situé à l'extrémité de la partie centrale 55 par l'un des caillebotis 32.

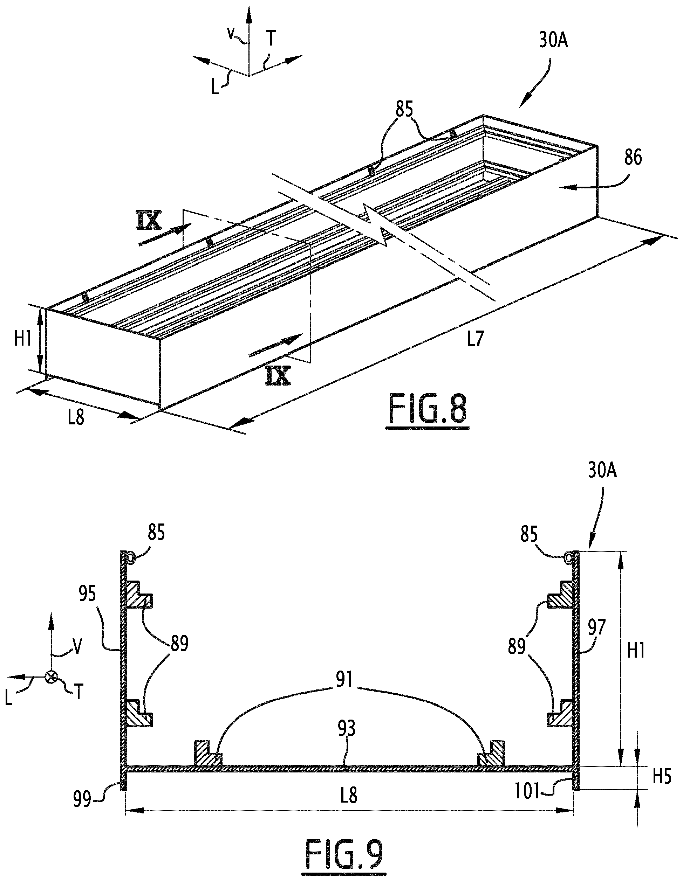

En référence aux figures 8 et 9, les bacs supplémentaires 30A, 30B, 30C sont constitués à au moins 90% en masse d'acier. Les bacs supplémentaires 30A présentent une forme générale sensiblement rectangulaire et allongée suivant la direction transversale T.

Les bacs supplémentaires 30A comprennent des renforts latéraux 89 formant avantageusement des cerclages sensiblement horizontaux, et des renforts 91 s'étendant sur un fond 93 par exemple selon la direction transversale T. Les bacs supplémentaires 30A comportent avantageusement deux parois latérales 95, 97 opposées selon la ligne L présentant respectivement des prolongements 99, 101 verticaux situés de part et d'autre du fond 93 selon la ligne L.

Les bacs supplémentaires 30A, 30B, 30C présentent une longueur L7 selon la direction transversale T égale à environ trois mètres par exemple, et une largeur L8 selon la ligne L d'environ 1 mètre. Leur hauteur est par exemple égale à la hauteur H2 des bacs 25A.

Le fond 93 repose sur la surface supérieure 67 de la partie centrale 55 de la structure porteuse 20A.

Les prolongements 99, 101 se situent de part et d'autre de la structure porteuse 20A selon la ligne L, de manière à caler les bacs supplémentaires 30A longitudinalement. Les prolongements 99, 101 présentent par exemple une hauteur H5 comprise entre 5 cm et 15 cm.

Dans l'exemple représenté, chaque structure porteuse 20A, 20B, 20C supporte respectivement deux bacs supplémentaires 30A, 30B, 30C, eux-mêmes situés transversalement entre des bacs 25A avec lesquels ils alternent.

En référence à la figure 3, la passerelle 30 enjambe la couverture 35. La passerelle 30 comprend par exemple des rampes dont l'inclinaison n'excède pas 5%, de manière à permettre le passage de personnes à mobilité réduite.

Une méthode de construction de l'ouvrage de couverture 1 va maintenant être décrite.

Les supports 51 sont tout d'abord installés dans le sol 5 de part et d'autre de la voie ou future voie de circulation 10.

Les portiques 53 sont livrés sur le chantier de construction sous la forme de modules métalliques correspondant par exemple aux parties 55, 57, 59 avec leurs systèmes d'armatures 63 internes.

Chaque module a une masse avantageusement inférieure ou égale à 10 tonnes, et une longueur inférieure ou égale à 8 mètres. Les modules sont avantageusement aux gabarits routier et ferroviaire.

Les modules sont ensuite assemblés à plat sur le sol 5, par exemple par boulonnage, et sont mis en place à l'aide de moyens de levage classiques (non représentés).

Les modules sont ensuite fixés sur les supports 51, par exemple par boulonnage.

Après le rajout éventuel de compléments de ferraillage au niveau des assemblages, les modules sont remplis de béton. Le béton est par exemple coulé depuis la surface supérieure 67 et remplit la structure porteuse.

Les bacs 25 sont préfabriqués en usine, en béton armé « dépolluant », c'est-à-dire incluant dans la masse un composé photo-catalytique comprenant du TiO₂ correspondant par exemple au procédé NOxer®. Le TiO2 est en général ajouté dans le béton lors du malaxage.

Selon un mode de construction alternatif, les bacs 25 sont coulés sur place. Selon ce mode de réalisation, les bacs 25 comprennent une coque interne et une coque externe en acier, le béton étant coulé entre les deux coques.

Les bacs 25 et les bacs supplémentaires 30A, 30B, 30C sont ensuite installés sur les structures porteuses 20A, 20B, 20C dans les positions décrites plus haut par rapport aux structures porteuses à l'aide d'une grue.

Les bacs 25 et les bacs supplémentaires 30A, 30B, 30C sont ensuite remplis de terre végétale et la végétation est mise en place. Les plantes les plus grandes sont avantageusement retenues par des haubans fixés sur les attaches 85.

La passerelle 30 est installée après l'installation des bacs, avantageusement avant la végétalisation.

Le fonctionnement de l'ouvrage de couverture 1 va maintenant être décrit brièvement, car il se déduit de sa structure.

En fonctionnement, des véhicules automobiles (non représentés) circulent sur les voies 10A, 10B de la voie de circulation 10, par exemple en deux sens opposés selon des flèches F3, F4 visibles sur les figures 1 et 2.

Du fait de la disposition des bacs 25 formant les écrans 74, le bruit émis par les véhicules automobiles ne peut pas traverser la couverture 35 selon les flèches F1, F2 représentées sur la figure 2. Le bruit émis par les véhicules automobiles ne peut se propager que vers le haut verticalement, ou obliquement selon les flèches F5, F6, F7, de sorte que des riverains situés à côté de l'ouvrage de construction 1 ne perçoivent pas de bruit, ou un bruit très atténué.

Selon la configuration et le résultat acoustique souhaité, des écrans phoniques sont avantageusement ajoutés sur ou en continuité des parois latérales des bacs 25, 30A, 30B, 30C, ou des structures porteuses 20A, 20B, 20C.

La couverture 35 comprenant de nombreuses ouvertures longitudinales entre les bacs 25, l'espace interne 40 n'est pas confiné. De l'air en provenance de l'espace interne 40 circule ainsi vers l'atmosphère 45, et réciproquement, par exemple selon des flèches F8, F9, F10 représentées sur la figure 2.

La pollution éventuellement présente dans l'air est réduite grâce au « béton dépolluant » des bacs 25 et grâce aux végétaux. Sous l'action des UV de la lumière solaire, le composé photo-catalytique favorise une réaction entre les dioxygènes de l'air et les NOx (oxydes d'azote). Sous l'effet de la pluie, les nitrates formés sont ensuite neutralisés, lessivés et récupérés dans les bacs, par exemple grâce à des gouttières (non représentées), pour une utilisation locale par les végétaux. La pollution est ainsi transformée en engrais.

Sur dix mètres linéaires de l'ouvrage de couverture 1, soit dans l'exemple environ 220 m² de surface au sol, la couverture 35 offre une importante surface photo-catalytique d'environ 440 m² et permet la création de jardins suspendus d'environ 110 m².

Grâce aux caractéristiques décrites ci-dessus, l'ouvrage de couverture 1 réduit le bruit perçu par les riverains.

Les avantages de l'ouvrage de construction 1 sont nombreux.

L'ouvrage de couverture 1 permet à la fois d'améliorer la sécurité et la fluidité de la voie de circulation en l'isolant de son environnement. Il permet en outre de libérer le quartier des contraintes posées par une artère de grande circulation.

L'ouvrage de couverture 1 permet la création d'une zone verte arbustive sur au moins 50% de sa surface au sol, tout en réduisant les nuisances visuelles, olfactives et auditives.

L'ouvrage de couverture 1 permet aussi une dépollution concrète de l'air, la pollution étant, grâce aux végétaux et au « béton dépolluant », recyclée pour créer des engrais utilisés *in situ* et favorisant la croissance de ces derniers.

Les structures porteuses 20A, 20B, 20C et les bacs 25, 30A, 30B, 30C de l'ouvrage de couverture 1 sont conçus pour être fabriqués en usine selon des procédés fiables, puis transportés par route ou par chemin de fer, car ils respectent les gabarits routiers et ferroviaires. A titre d'alternative les bacs peuvent être fabriqués sur place. Ces éléments sont ensuite mis en place à l'aide de moyens courants.

La végétation des jardins suspendus créés par l'ouvrage de couverture 1 permet d'améliorer la qualité de l'air par une filtration de poussières et des polluants, de créer un microclimat par l'évapotranspiration des plantes, de récupérer les eaux pluviales pour une meilleure gestion de l'eau et de réaliser des économies d'énergie par la diminution des amplitudes thermiques au niveau du quartier. L'ouvrage de couverture 1 permet aussi d'élever la valeur des biens immobiliers qui est plus élevée à proximité des espaces verts que face à une voie rapide, d'améliorer la santé des riverains par une baisse du stress, la voie rapide étant cachée par une colline végétalisée, de créer de nouveaux biotopes favorisant la biodiversité, de limiter l'effet de serre par une fixation du CO₂, d'améliorer le paysage grâce à un écran contre le trafic, notamment routier, et d'améliorer l'esthétique de la rue et du quartier.

Grâce à la passerelle 30, il est possible à des piétons de traverser l'ouvrage de couverture 1 en toute sécurité.

Le fait d'être très largement ouvert sur l'extérieur, par exemple à plus de 50%, rend l'ouvrage de couverture 1 perméable aux fumées et empêche en cas d'incendie la stagnation et l'accumulation des gaz chaud, la stratification des fumées et l'augmentation de la température dans l'espace interne 40. La couverture 1 n'aggrave pas le risque lié aux incendies de véhicule par rapport à une voie ouverte et n'est donc a priori pas éligible à la législation locale applicable aux tunnels, ce qui représente une véritable économie en investissements, mais aussi en maintenance et en énergie. Des passages latéraux (non représentés) dans les bacs 25B posés sur le sol 5 peuvent par exemple servir d'issues de secours, avantageusement accessibles aux personnes à mobilité réduite, pour sortir de plein pied de l'ouvrage de construction 1 vers l'extérieur, ou d'entrées piétonnes depuis l'extérieur vers l'espace interne 40 pour des services d'urgence ou des services de maintenance.

L'ouvrage de couverture 1 permet par exemple de faire passer des réseaux (eau, électricité, courant faible .....) en aérien entre les bacs 25B sous les caillebottis 32. Cela représente pour les collectivités un gain économique important et permet aux concessionnaires de facilement visiter ou intervenir sur ces derniers en toute sécurité et hors d'accessibilité du public.

L'ouvrage de construction 1 est une innovation quatre fois gagnante, car il représente un atout pour la ville (embellissement du cadre de vie, augmentation de la valeur économique du quartier), pour les riverains (diminution du bruit, de la pollution, amélioration visuelle), pour la biodiversité (création de nouveaux biotopes, réintroduction naturelle d'insectes et d'oiseaux, création de corridors écologiques, développement de l'écologie urbaine) et pour les flux de transport (sécurité des piétons, séparations des flux entre véhicule en transit et véhicule en desserte locale, amélioration de la fluidité, élimination des feux, passages protégés...).

Le coût d'investissement de l'ouvrage de couverture 1 est estimé à environ 30% à 50% du coût d'un ouvrage enterré classique, sans compter les économies d'énergie et de maintenance.

## Revendications

1. Ouvrage de couverture (1) semi-ouvert destiné à couvrir partiellement une voie de circulation (10), notamment automobile, s'étendant sur un sol (5) selon une ligne (L), l'ouvrage de couverture comprenant :
- une pluralité de structures porteuses (20A, 20B, 20C) distribuées suivant la ligne (L), chaque structure porteuse (20A, 20B, 20C) s'étendant d'une première portion de sol (47) située d'un côté de la voie de circulation (10), jusqu'à une deuxième portion de sol (49) située de l'autre côté, et
- une pluralité de bacs (25, 25A, 25B) adaptés pour recevoir de la terre végétale et des plantes, chaque bac (25, 25A, 25B) reposant ou étant fixé sur au moins une structure porteuse (20A, 20B, 20C), de préférence au moins deux structures porteuses (20A, 20B, 20C) consécutives de ladite pluralité,
**caractérisé en ce que** :
- les bacs (25, 25A, 25B) et les structures porteuses (20A, 20B, 20C) forment une couverture (35) définissant des ouvertures permettant à l'air de circuler entre les bacs (25, 25A, 25), depuis un espace interne (40) situé entre la couverture (35) et le sol (5), vers l'atmosphère (45) située autour de l'ouvrage de couverture (1), et
- les bacs (25, 25A, 25B) et les structures porteuses (20A, 20B, 20C) forment au moins un écran (74) propre à s'opposer à une propagation (F1, F2) d'ondes sonores horizontalement et sensiblement orthogonalement à la ligne (L) de l'espace interne (40) vers l'atmosphère (45), l'écran (74) s'étendant selon la ligne (L) entre au moins deux structures porteuses (20A, 20B, 20C) consécutives, et verticalement de préférence sur toute la hauteur de l'ouvrage de couverture (1) entre lesdites deux structures porteuses (20A, 20B, 20C).

2. Ouvrage de couverture (1) selon la revendication 1, dans lequel, en projection verticale sur un plan (P') sensiblement parallèle au sol (5), les ouvertures représentent au moins 30%, de préférence au moins 50%, de la couverture (35).

3. Ouvrage de couverture (1) selon la revendication 1 ou 2, comprenant en outre au moins une passerelle (30) propre à permettre le passage de personnes au-dessus de la couverture (35) depuis la première portion de sol (47) jusqu'à la deuxième portion de sol (49).

4. Ouvrage de couverture (1) l'une quelconque des revendications 1 à 3, comprenant en outre des surfaces comprenant des caillebotis (32), les surfaces étant adaptées et disposées pour permettre à des personnes de se déplacer entre ou le long des bacs (25, 25A, 25B).

5. Ouvrage de couverture (1) selon l'une quelconque des revendications 1 à 4, dans lequel les structures porteuses (20A, 20B, 20C) comprennent un portique (53), le portique (53) comportant une enveloppe (61) en acier, un système d'armatures (63) en acier, et du béton (65) coulé ou injecté dans l'enveloppe (61).

6. Ouvrage de couverture (1) selon l'une quelconque des revendications 1 à 5, dans lequel les structures porteuses (20A, 20B, 20C) comportent des surfaces d'appui (73), de préférence sensiblement parallèles au sol (5), sur lesquelles sont posés et/ou fixés les bacs (25, 25A, 25B).

7. Ouvrage de couverture (1) selon l'une quelconque des revendications 1 à 6, dans lequel la pluralité de bacs (25, 25A, 25B) comprend des bacs (25B) constitués à au moins 50% en masse de béton, de forme sensiblement rectangulaire et allongée sensiblement selon la ligne (L), chacun desdits bacs (25B) comportant avantageusement une paroi latérale (87) plus élevée que ses autres parois latérales.

8. Ouvrage de couverture (1) selon l'une quelconque des revendications 1 à 7, dans lequel la pluralité de bacs (25, 25A, 25B) comprend des bacs (25A) constitués à au moins 50% en masse de béton, de forme sensiblement rectangulaire et allongée sensiblement selon la ligne (L), chacun desdits bacs (25A) comportant avantageusement une surface inférieure (75) présentant deux épaulements (77, 79) adaptés pour permettre un calage desdits bacs (25A) selon la ligne (L) sur deux structures porteuses (20A, 20B, 20C) consécutives.

9. Ouvrage de couverture (1) selon l'une quelconque des revendications 1 à 8, comprenant des bacs supplémentaires (30A, 30B, 30C) constitués à au moins 90% en masse d'acier, de forme sensiblement rectangulaire et allongée sensiblement orthogonalement à la ligne (L), chacun desdits bacs (30A, 30B, 30C) ayant un fond (93) posé sur une surface supérieure (67) de l'une quelconque des structures porteuses (20A, 20B, 20C), et ayant de préférence deux parois latérales (95, 97) présentant respectivement des prolongements (99, 101) sensiblement verticaux, les prolongements (99, 101) se situant de part et d'autre de ladite structure porteuse (20A , 20B, 20C) selon la ligne (L).

10. Procédé de couverture (1) mettant en oeuvre un ouvrage de couverture (1) selon l'une quelconque des revendications 1 à 9 pour couvrir partiellement une voie de circulation (10), notamment automobile, s'étendant sur un sol (5) selon une ligne (L), le procédé comportant les étapes suivantes :
- mise en place d'une pluralité de structures porteuses (20A, 20B, 20C) distribuées suivant la ligne (L), chaque structure porteuse (20A, 20B, 20C) s'étendant d'une première portion de sol (47) située d'un côté de la voie de circulation (10) jusqu'à une deuxième portion de sol (47) située de l'autre côté,
- mise en place d'une pluralité de bacs (25, 25A, 25B) adaptés pour recevoir de la terre végétale et des plantes, chaque bac (25, 25A, 25B) reposant ou étant fixé sur au moins deux structures porteuses (20A, 20B, 20C) consécutives de ladite pluralité,
- formation, à l'aide des bacs (25, 25A, 25B) et des structures porteuses (20A, 20B, 20C), d'une couverture (35) définissant des ouvertures permettant à l'air de circuler entre les bacs (25, 25A, 25B), depuis un espace interne (40) situé entre la couverture (35) et le sol (5), vers l'atmosphère (45) située autour de l'ouvrage de couverture (1), et
- formation, à l'aide des bacs (25, 25A, 25B) et des structures porteuses (20A, 20B, 20C), d'au moins un écran (74) propre à s'opposer à une propagation (F1, F2) d'ondes sonores horizontalement et sensiblement orthogonalement à la ligne (L) de l'espace interne (40) vers l'atmosphère (45), l'écran (74) s'étendant selon la ligne (L) entre au moins deux structures porteuses (20A, 20B, 20C) consécutives, et verticalement de préférence sur toute la hauteur de l'ouvrage de couverture entre lesdites deux structures porteuses (20A, 20B, 20C).

## Patentansprüche

1. - Halb offene Abdeckung (1) zur Teilabschirmung einer Fahrspur (10), insbesondere für Kfz, die sich an einem Boden (5) entlang einer Linie (L) erstreckt, wobei die Abdeckung umfasst:
- eine Mehrzahl Tragkonstruktionen (20A, 20B, 20C), die entlang der Linie (L) verteilt sind, wobei jede Tragkonstruktion (20A, 20B, 20C) sich von einem ersten Bodenabschnitt (47) auf einer Seite der Fahrspur (10) bis zu einem zweiten Bodenabschnitt (49) auf der anderen Seite erstreckt, und
- eine Mehrzahl Behälter (25, 25A, 25B), die zur Aufnahme von Mutterboden und Pflanzen geeignet sind, wobei jeder Behälter (25, 25A, 25B) auf mindestens einer Tragkonstruktion (20A, 20B, 20C), vorzugsweise auf mindestens zwei aufeinanderfolgenden Tragkonstruktionen (20A, 20B, 20C) der Mehrzahl, aufliegt bzw. darauf befestigt ist;
**dadurch gekennzeichnet, dass**:
- die Behälter (25, 25A, 25B) und die Tragkonstruktionen (20A, 20B, 20C) eine Abdeckung (35) bilden, die Öffnungen definiert, die Luft zwischen den Behältern (25, 25A, 25) von einem Innenraum (40) zwischen der Abdeckung (35) und dem Boden (5) zur Atmosphäre (45) in der Umgebung der Abdeckung (1) zirkulieren lassen, und
- die Behälter (25, 25A, 25B) und die Tragkonstruktionen (20A, 20B, 20C) mindestens eine Abschirmung (74) bilden, die dazu geeignet ist, einer Ausbreitung (F1, F2) von Schallwellen, die horizontal und im Wesentlichen orthogonal zur Linie (L) vom Innenraum (40) zur Atmosphäre (45) verläuft, entgegenzuwirken, wobei sich die Abschirmung (74) entlang der Linie (L) zwischen mindestens zwei aufeinanderfolgenden Tragkonstruktionen (20A, 20B, 20C) und vertikal vorzugsweise über die ganze Höhe der Abdeckung (1) zwischen den beiden Tragkonstruktionen (20A, 20B, 20C) erstreckt.

2. Abdeckung (1) nach Anspruch 1, wobei die Öffnungen in der vertikalen Projektion auf einer Ebene (P'), die im Wesentlichen parallel zum Boden (5) verläuft, mindestens 30 %, vorzugsweise mindestens 50 % der Abdeckung (35) darstellen.

3. Abdeckung (1) nach Anspruch 1 oder 2, ferner umfassend mindestens eine Fußgängerbrücke (30), die dazu geeignet ist, den Durchgang von Menschen oberhalb der Abdeckung (35) vom ersten Bodenabschnitt (47) zum zweiten Bodenabschnitt (49) zu ermöglichen.

4. Abdeckung (1) nach einem der Ansprüche 1 - 3, ferner umfassend Oberflächen, die Gitterroste (32) umfassen, wobei die Oberflächen dazu geeignet sind, die Bewegung von Personen zwischen bzw. entlang den Behältern (25, 25A, 25B) zu ermöglichen

5. Abdeckung (1) nach einem der Ansprüche 1 - 4, wobei die Tragkonstruktionen (20A, 20B, 20C) ein Portal (53) umfassen, wobei das Portal (53) eine Stahlumhüllung (1), sowie eine Armatureneinrichtung (63) aus Stahl und Beton (65), die in die Umhüllung (61) eingegossen bzw. -gespritzt worden ist.

6. Abdeckung (1) nach einem der Ansprüche 1 - 5, wobei die Tragkonstruktionen (20A, 20B, 20C) Lageroberflächen (73) umfassen, die vorzugsweise im Wesentlichen parallel zum Boden (5) sind und auf denen die Behälter (25, 25A, 25B) positioniert und/oder befestigt sind.

7. Abdeckung (1) nach einem der Ansprüche 1 - 6, wobei die Mehrzahl Behälter (25, 25A, 25B) Behälter (25B) umfasst, die zu mindestens 50 Masse % aus Beton bestehen, im Wesentlichen rechteckig und länglich im Wesentlichen entlang der Linie (L) sind, wobei jeder der Behälter (25B) vorteilhafterweise eine Seitenwand (87) umfasst, die höher ist als seine anderen Seitenwände.

8. Abdeckung (1) nach einem der Ansprüche 1 - 7, wobei die Mehrzahl Behälter (25, 25A, 25B) Behälter (25A) umfasst, die zu mindestens 50 Masse % aus Beton bestehen, im Wesentlichen rechteckig und länglich im Wesentlichen entlang der Linie (L) sind, wobei jeder der Behälter (25A) vorteilhafterweise eine Unterseite (75) umfasst, die zwei Schultern (77, 79) aufweist, die dazu geeignet sind, die Befestigung der Behälter (25A) entlang der Linie (L) auf zwei aufeinanderfolgenden Tragkonstruktionen (20A, 20B, 20C) zu ermöglichen.

9. Abdeckung (1) nach einem der Ansprüche 1 - 8, umfassend zusätzliche Behälter (30A, 30B, 30C), die zu mindestens 90 Masse % aus Stahl bestehen, im Wesentlichen rechteckig und im Wesentlichen orthogonal zur Linie (L) länglich sind, wobei jeder der Behälter (30A, 30B, 30C) einen Boden (93) aufweist, der auf einer Oberseite (67) einer der Tragkonstruktionen (20A, 20B, 20C) aufliegt, und vorzugsweise zwei Seitenwände (95, 97), die jeweils im Wesentlichen vertikale Verlängerungen (99, 101) aufweisen, umfasst, wobei die Verlängerungen (99, 101) beiderseits der Tragkonstruktion (20A , 20B, 20C) entlang der Linie (L) angeordnet sind.

10. Abdeckungsverfahren (1), bei dem eine Abdeckung (1) nach einem der Ansprüche 1 - 9 verwendet wird, um eine Fahrspur (10), insbesondere für Kfz, teilweise abzudecken, die sich an einem Boden (5) entlang einer Linie (L) erstreckt, wobei das Verfahren die Schritte umfasst:
- Vorsehen einer Mehrzahl Tragkonstruktionen (20A, 20B, 20C), die entlang der Linie (L) verteilt sind, wobei jede Tragkonstruktion (20A, 20B, 20C) sich von einem ersten Bodenabschnitt (47) auf einer Seite der Fahrspur (10) bis zu einem zweiten Bodenabschnitt (47) auf der anderen Seite erstreckt,
- Vorsehen einer Mehrzahl Behälter (25, 25A, 25B), die zur Aufnahme von Mutterboden und Pflanzen geeignet sind, wobei jeder Behälter (25, 25A, 25B) auf mindestens zwei aufeinanderfolgenden Tragkonstruktionen (20A, 20B, 20C) der Mehrzahl, aufliegt bzw. darauf befestigt ist,
- Bilden einer Abdeckung (35), die Öffnungen definiert, die Luft zwischen den Behältern (25, 25A, 25) von einem Innenraum (40) zwischen der Abdeckung (35) und dem Boden (5) zur Atmosphäre (45) in der Umgebung der Abdeckung (1) zirkulieren lassen, mithilfe der Behälter (25, 25A, 25B) und der Tragkonstruktionen (20A, 20B, 20C), und
- Bilden mindestens einer Abschirmung (74) bilden, die dazu geeignet ist, einer Ausbreitung (F1, F2) von Schallwellen, die horizontal und im Wesentlichen orthogonal zur Linie (L) vom Innenraum (40) zur Atmosphäre (45) verläuft, entgegenzuwirken, mithilfe der Behälter (25, 25A, 25B) und der Tragkonstruktionen (20A, 20B, 20C) wobei sich die Abschirmung (74) entlang der Linie (L) zwischen mindestens zwei aufeinanderfolgenden Tragkonstruktionen (20A, 20B, 20C) und vertikal vorzugsweise über die ganze Höhe der Abdeckung zwischen den beiden Tragkonstruktionen (20A, 20B, 20C) erstreckt.

## Claims

1. A semi-open covering structure (1) intended to partially cover a traffic lane (10), in particular for automobiles, extending on a ground (5) along a line (L), the covering structure comprising:
- a plurality of support structures (20A, 20B, 20C) distributed along the line (L), each support structure (20A, 20B, 20C) extending from a first ground portion (47) located on one side of the traffic lane (10), to a second ground portion (49) located on the other side, and
- a plurality of troughs (25, 25A, 25B) suitable for receiving topsoil and plants, each trough (25, 25A, 25B) resting or being fastened on at least one support structure (20A, 20B, 20C), preferably at least two consecutive support structures (20A, 20B, 20C) of said plurality,
**characterized in that**:
- the troughs (25, 25A, 25B) and the support structures (20A, 20B, 20C) form a cover (35) defining openings allowing air to circulate between the troughs (25, 25A, 25), from an inner space (40) located between the cover (35) and the ground (5), toward the atmosphere (45) located around the cover structure (1), and
- the troughs (25, 25A, 25B) and the support structures (20A, 20B, 20C) form at least one screen (74) able to oppose a propagation (F1, F2) of sound waves horizontally and substantially orthogonally to the line (L) from the inner space (40) toward the atmosphere (45), the screen (74) extending along the line (L) between at least two consecutive support structures (20A, 20B, 20C), and vertically preferably over the entire height of the cover structure (1) between said two support structures (20A, 20B, 20C).

2. The cover structure (1) according to claim 1, wherein, projected vertically over a plane (P') substantially parallel to the ground (5), the openings represent at least 30%, preferably at least 50%, of the cover (35).

3. The cover structure (1) according to claim 1 or 2, further comprising at least one gateway (30) suitable for allowing people to pass above the cover (35) from the first ground portion (47) to the second ground portion (49).

4. The cover structure (1) according to any one of claims 1 to 3, further comprising structures comprising gratings (32), the surfaces being adapted and arranged to allow people to move between or along the troughs (25, 25A, 25B).

5. The cover structure (1) according to any one of claims 1 to 4, wherein the support structures (20A, 20B, 20C) comprise a gantry (53), the gantry (53) including a steel enclosure (61), a system of steel casings (63), and concrete (65) poured or injected into the enclosure (61).

6. The cover structure (1) according to any one of claims 1 to 5, wherein the support structures (20A, 20B, 20C) include bearing surfaces (73), preferably substantially parallel to the ground (5), on which the troughs (25, 25A, 25B) are placed and/or fastened.

7. The cover structure (1) according to any one of claims 1 to 6, wherein the plurality of troughs (25, 25A, 25B) comprises troughs (25B) made up of at least 50 wt% of concrete, with a substantially rectangular shape elongated substantially along the line (L), each of said troughs (25B) advantageously including a side wall (87) higher than its other side walls.

8. The cover structure (1) according to any one of claims 1 to 7, wherein the plurality of troughs (25, 25A, 25B) comprises troughs (25A) made up at least 50 wt% of concrete, with a substantially rectangular shape and elongated substantially along the line (L), each of said troughs (25A) advantageously including an inner surface (75) having two shoulders (77, 79) suitable for allowing bracing of said troughs (25A) along the line (L) on two consecutive support structures (20A, 20B, 20C).

9. The cover structure (1) according to any one of claims 1 to 8, comprising additional troughs (30A, 30B, 30C) made up of at least 90 wt% of steel, with a substantially rectangular shape elongated substantially orthogonally to the line (L), each of said troughs (30A, 30B, 30C) having a bottom (93) placed on an upper surface (67) of any one of the support structures (20A, 20B, 20C), and preferably having two side walls (95, 97) respectively having substantially vertical extensions (99, 101), the extensions (99, 101) being located on either side of said support structure (20A, 20B, 20C) along the line (L).

10. A covering method (1) implementing a cover structure (1) according to any one of claims 1 to 9 to partially cover a traffic lane (10), in particular for automobiles, extending on a ground (5) along a line (L), the method including the following steps:
- placing a plurality of support structures (20A, 20B, 20C) distributed along the line (L), each support structure (20A, 20B, 20C) extending from a first ground portion (47) located on one side of the traffic lane (10) to a second ground portion (47) located on the other side,
- placing a plurality of troughs (25, 25A, 25B) suitable for receiving topsoil and plants, each trough (25, 25A, 25B) resting or being fastened on at least two consecutive support structures (20A, 20B, 20C) of said plurality,
- forming, using said troughs (25, 25A, 25B) and support structures (20A, 20B, 20C), a cover (35) defining openings allowing air to circulate between the troughs (25, 25A, 25B), from an inner space (40) located between the cover (35) and the ground (5), toward the atmosphere (45) located around the cover structure (1), and
- forming, using troughs (25, 25A, 25B) and support structures (20A, 20B, 20C), at least one screen (74) able to oppose a propagation (F1, F2) of sound waves horizontally and substantially orthogonally to the line (L) from the inner space (40) toward the atmosphere (45), the screen (74) extending along the line (L) between at least two consecutive support structures (20A, 20B, 20C), and vertically preferably over the entire height of the cover structure (1) between said two support structures (20A, 20B, 20C).
